# EUROPÄISCHE PATENTSCHRIFT

(11) **EP 2 508 811 B1**
(45) Veröffentlichungstag und Bekanntmachung des Hinweises auf die Patenterteilung: **12.03.2014**
(21) Anmeldenummer: 12172715.0
(22) Anmeldetag: 08.04.2011
(51) Int. Cl.: F24F 7/06, F24F 11/00, F24F 11/02, F24F 11/04

(54) **Vorrichtung zur Ermittlung des von einem Ventilator transportierten Volumenstroms**
Device for calculating the volume flow transported by a ventilator
Dispositif de détermination d'un débit volumique transporté par un ventilateur

(43) Veröffentlichungstag der Anmeldung: 10.10.2012
(62) Teilanmeldung aus: 11002957.6
(73) Patentinhaber: Zehnder Verkaufs- und Verwaltungs AG, 5722 Gränichen (CH)
(72) Erfinder: Meijer, Gerrit, 7772 MC Hardenberg (NL); Jansen, Peter Johan, 8042 GG Zwolle (NL); De Jong, Christiaan, 7722 AX Dalfsen (NL)
(74) Vertreter: Stenger, Watzke & Ring

(56) Entgegenhaltungen:
- EP-A2- 0 415 747
- WO-A1-2007/004446
- WO-A1-2010/122117
- WO-A1-2011/004025
- GB-A- 2 298 057
- US-A1- 2002 164 944

## Beschreibung

Die Erfindung betrifft eine Vorrichtung zur Ermittlung des von einem Ventilator transportierten Volumenstroms, insbesondere zur Verwendung in einem Ventilatormodul.

Aus dem Stand der Technik sind Lüftungseinheiten bekannt, die typischerweise über einen Ventilator einerseits und einen Wärmetauscher andererseits verfügen. Über den Ventilator wird Frischluft von außen angesaugt und in den Raum hineintransportiert. Im Austausch gegen diese dem Raum von außen zugeführte Frischluft wird aus dem Raum Abluft abtransportiert und in die den Raum umgebende Atmosphäre abgegeben. Zum Zwecke der Energieeinsparung werden die Zuluft und die Abluft über einen Wärmetauscher geführt, so dass eine Energieübertragung in Form eines Wärmeübergangs von der Zuluft auf die Abluft beziehungsweise in umgekehrter Richtung stattfinden kann.

Ventilatoren vorbekannter Lüftungseinheiten sind typischerweise zur Geräuschminimierung gekapselt ausgebildet und/oder außerhalb des zu belüftenden Raumes angeordnet. Dabei kommen je nach Einbausituation vor Ort und/oder zu fordernder Förderleistung entsprechend ausgestaltete Ventilatoren zum Einsatz.

Grundsätzlich ist bekannt, dass der von einem Ventilator transportierte Volumenstrom gemessen wird, um Steuerungen oder Regelungen vorzunehmen. So kann beispielsweise der Förderdruck oder das Fördervolumen durch Blattverstellung, Drehzahlregelung und dergleichen verändert werden (Siehe z.B. Patentschrift WO-2010/122117-A).

Bekannt sind Regelungen, bei denen die Drehzahl, abhängig von der Stromzufuhr, zum Volumenstrom in einem bestimmten Verhältnis steht. Dies geht in der Regel nur mit vorwärts gekrümmten Ventilatoren, die allerdings hohe Laufgeräusche haben. Darüber hinaus ist die Genauigkeit nur im Bereich von ± 5% realisierbar. Bei neueren, auch rückwärts gekrümmten Ventilatoren werden Druckdifferenzmessungen durchgeführt. Dafür eingesetzte Schlauchringe weisen beispielsweise alle 120° eine kleine Öffnung auf und über ein Messrohr wird die Druckdifferenz zur Außenatmosphäre festgestellt. Diese vorbekannten Vorrichtungen haben sich in der Praxis jedoch in der Regel als sehr anfällig gegen Verschmutzung und insbesondere Kondensat gezeigt. In dem Schlauchring kondensiert das Kondensat und verschließt die jeweilige Öffnung und tritt insbesondere auch in das Messrohr ein. Dieses kann jedoch nicht anders positioniert werden. Dadurch ergibt sich eine sehr schlechte Kennlinienverfolgung und damit eine sehr negative Steuerung.

Ausgehend vom vorbeschriebenen Stand der Technik liegt der Erfindung die **Aufgabe** zugrunde, eine Vorrichtung zur Ermittlung des von einem Ventilator transportierten Volumenstroms bereitzustellen, welche möglichst genau ist, eine einfache Auswertung ermöglicht und darüber hinaus unanfällig gegen Verschmutzung und Kondensat ist.

Zur technischen **Lösung** dieser Aufgabe wird mit der Erfindung vorgeschlagen eine Vorrichtung zur Ermittlung des von einem Ventilator transportierten Volumenstroms, mit einem im Bereich einer Einlaufdüse des Ventilators anzuordnenden geschlossenen Ringkanal mit einer Vielzahl von Öffnungen in der äußeren Wandung und wenigstens einer Messöffnung; einem Referenzrohr zur Positionierung in einer Umgebungsatmosphäre und einem Druckdifferenzsensor zur Verbindung mit der Messöffnung und dem Referenzrohr.

Erfindungsgemäß wird im Bereich einer Einlaufdüse der Ventilatoreinrichtung ein geschlossener Ringkanal mit einer Vielzahl von Öffnungen in der äußeren Wandung und einer Messöffnung angeordnet. Ein Referenzrohr wird in einer Umgebungsatmosphäre angeordnet. Der Druckdifferenzsensor wird mit der Messöffnung und dem Referenzrohr verbunden.

Der Ringkanal kann aus Kunststoff gebildet sein.

In vorteilhafter Weise ist der Ringkanal als geschlossener 360°-Ringkanal ausgebildet und weist in unterschiedlich umlaufenden Positionen Öffnungen auf. Vorzugsweise sind diese mittelpunktsymmetrisch angeordnet, das heißt es gibt eine unterste und eine oberste Öffnung und in unterschiedlichen Gradabständen jeweils weitere Öffnungen.

In vorteilhafter Weise ist die Messöffnung so positioniert, dass sie bei bestimmungsgemäßem Einbau des Ringkanals oberhalb des Äquators des Ringkanals angeordnet ist. Auf diese Weise kann bei der Ausbildung von Kondensat im Inneren des Ringkanals das Kondensat aus unten liegenden Öffnungen ausfließen während die Messöffnungen davon unberührt bleiben. In vorteilhafter Weise wird so sichergestellt, dass eine Verstopfung der Messöffnung durch sich ausbildendes Kondensat vermieden wird, so dass stets eine bestimmungsgemäße Ermittlung des von der Ventilatoreinrichtung transportierten, das heißt geförderten Volumenstroms möglich ist.

Bei aus dem Stand der Technik bekannten Vorrichtungen zur Ermittlung des von einer Ventilatoreinrichtung transportierten Volumenstroms ist dies nicht möglich, weil die bei diesen Vorrichtungen vorgesehenen Messöffnungen aufgrund ihrer Ausgestaltung und Positionierung dazu neigen, bei auftretendem Kondensat zu verstopfen, so dass sachgerechte Messungen nicht durchgeführt werden können. Die erfindungsgemäße Weiterbildung schafft hier insofern Abhilfe.

Gemäß einem besonders vorteilhaften Vorschlag der Erfindung ist der Sensor ein thermischer Druckdifferenzsensor. Dies hat den Vorteil, dass man praktisch den Massenstrom ermitteln kann, was insbesondere bei der Steuerung von Wärmetauscherund Lüftungsanlagen von großem Vorteil ist.

Der Sensor ist in vorteilhafter Weise elektronisch auswertbar und mit einer Auswerteelektronik verbunden. Die Drehzahlregelung des Ventilators ist ebenfalls mit der Auswerteelektronik oder einer Steuerung verbunden, die ihrerseits auch die Auswerteelektronik ausliest.

Eine erfindungsgemäße Vorrichtung zur Ermittlung des von einer Ventilatoreinrichtung transportierten Volumenstroms wird bevorzugt in einem nachstehend beschriebenen Ventilatormodul eingesetzt.

Es wird vorgeschlagen ein Ventilatormodul für eine Lüftungseinheit zur Versorgung eines Raumes oder eines Teils hiervon mit Zuluft, insbesondere Frischluft, vorzugsweise im Austausch gegen aus dem Raum oder einem Teil hiervon stammender Abluft. Dieses Ventilatormodul findet mit einer Lüftungseinheit zur Versorgung eines Raums oder eines Teils hiervon mit Zuluft, insbesondere Frischluft Verwendung und ist als eigenständig handhabbare Baugruppe ausgebildet. Das Modul umfasst eine Ventilatoreinrichtung, eine erfindungsgemäße Vorrichtung zur Ermittlung des von der Ventilatoreinrichtung transportierten Luftstromes sowie eine Steuerungseinrichtung, die Sensoren für Temperatur, Strömungsvolumen und relative Luftfeuchte umfasst.

Das Ventilatormodul ist als eigenständig handhabbare Baugruppe ausgebildet. Es stellt insofern ein standardisiertes Bauteil dar, das mit Lüftungseinheiten unterschiedlicher Bauform, Größe und Art wahlweise kombiniert werden kann. Besonderer Einrichtungen und/oder Montagearbeiten am Einbauort bedarf es insofern nicht. In vorteilhafter Weise kann das Ventilatormodul insofern auch als Nachrüstteil eingesetzt werden.

Das Ventilatormodul verfügt über eine Ventilatoreinrichtung. Die Ventilatoreinrichtung verfügt ihrerseits über wenigstens einen Ventilatormotor und ein damit gekoppeltes Ventilatorrad.

Das Ventilatormodul verfügt zudem über eine erfindungsgemäße Vorrichtung zur Ermittlung des von der Ventilatoreinrichtung transportierten Luftstroms. Diese Vorrichtung gestattet es im bestimmungsgemäßem Verwendungsfall, den von der Ventilatoreinrichtung geförderten Luftstrom zu ermitteln und hierauf basierend eine Steuerung der Ventilatoreinrichtung vorzunehmen. Auf Basis des erfassbaren Volumenstroms kann insbesondere eine Drehzahlregelung des Ventilatormotors der Ventilatoreinrichtung vorgenommen werden.

Das Ventilatormodul verfügt desweiteren über eine Steuerungseinrichtung, die Sensoren für Temperatur, Strömungsvolumen und relative Luftfeuchte umfasst. Mittels dieser Steuerungseinrichtung kann auf den Betrieb der Ventilatoreinrichtung Einfluss genommen werden, und zwar in Abhängigkeit der von den Sensoren für Temperatur, Strömungsvolumen und relative Luftfeuchte gelieferten Messdaten. Individuellen Wünschen und Vorgaben an die Luftqualität in dem mit Frischluft zu versorgenden Raum kann so in vorteilhafter Weise Rechnung getragen werden.

Das Ventilatormodul ist als Funktionsgruppe zu sehen. Es umfasst die für eine bestimmungsgemäße Belüftung eines Raumes vorgesehenen Einzelkomponenten, das heißt sowohl die Ventilatoreinrichtung als auch die für eine Regelung vorzusehenden Einzelkomponenten, das heißt insbesondere die erfindungsgemäße Vorrichtung zur Ermittlung des von der Ventilatoreinrichtung geförderten Luftstroms als auch die die Sensoren für Temperatur, Strömungsvolumen und relative Luftfeuchte umfassende Steuerungseinrichtung. Diese funktional gemeinschaftliche Baugruppe ist als eigenständig handhabbare Baugruppe ausgebildet, was die Kombination mit einer Lüftungseinheit in einfacher Weise gestattet. Dabei ist es insbesondere herstellerseitig möglich, das Ventilatormodul in bestimmungsgemäßer Weise vorauszurüsten, so dass am Einbauort monteurseitig nur noch wenige Handgriffe erforderlich sind. Montagearbeiten und insbesondere fehlerträchtige Ausrüstungsarbeiten zur Erzielung eines bestimmungsgemäßen Betriebs können so in vorteilhafter Weise vermieden werden. Damit erweist sich das Ventilatormodul insbesondere unter dem Gesichtspunkt der Betriebssicherheit als vorteilhaft. Ferner kann eine vereinfache Montage vor Ort sichergestellt werden.

Das Ventilatormodul kann als gekapselte Baueinheit ausgestaltet sein, die zum Zwecke der endfertigen Montage nur noch an den Zuluftkanal und/oder den Abluftkanal einer Lüftungseinheit anzuschließen ist.

Zur Verwendung der erfindungsgemäßen Vorrichtung in einem Ventilatormodul wird im Bereich einer Einlaufdüse der Ventilatoreinrichtung ein geschlossener Ringkanal mit einer Vielzahl von Öffnungen in der äußeren Wandung und einer Messöffnung angeordnet. Ein Referenzrohr wird in einer Umgebungsatmosphäre angeordnet. Der Druckdifferenzsensor wird mit der Messöffnung und dem Referenzrohr verbunden. Der Ringkanal kann aus Kunststoff gebildet sein. In vorteilhafter Weise ist der Ringkanal als geschlossener 360°-Ringkanal ausgebildet und weist in unterschiedlich umlaufenden Positionen Öffnungen auf. Vorzugsweise sind diese mitteilpunktsymmetrisch angeordnet, das heißt es gibt eine unterste und eine oberste Öffnung und in unterschiedlichen Gradabständen jeweils weitere Öffnungen. In vorteilhafter Weise ist die Messöffnung so positioniert, dass sie bei bestimmungsgemäßem Einbau des Ringkanals oberhalb des Äquators des Ringkanals angeordnet ist. Auf diese Weise kann bei der Ausbildung von Kondensat im Inneren des Ringkanals das Kondensat aus unten liegenden Öffnungen ausfließen während die Messöffnungen davon unberührt bleiben. In vorteilhafter Weise wird so sichergestellt, dass eine Verstopfung der Messöffnung durch sich ausbildendes Kondensat vermieden wird, so dass stets eine bestimmungsgemäße Ermittlung des von der Ventilatoreinrichtung transportierten, das heißt geförderten Volumenstroms möglich ist. Bei aus dem Stand der Technik bekannten Vorrichtungen zur Ermittlung des von einer Ventilatoreinrichtung transportierten Volumenstroms ist dies nicht möglich, weil die bei diesen Vorrichtungen vorgesehenen Messöffnungen aufgrund ihrer Ausgestaltung und Positionierung dazu neigen, bei auftretendem Kondensat zu verstopfen, so dass sachgerechte Messungen nicht durchgeführt werden können. Die erfindungsgemäße Weiterbildung schafft hier insofern Abhilfe.

Die Steuerungseinrichtung des Ventilatormoduls verfügt über einen Temperatursensor, einen Strömungsvolumensensor und einen Sensor für relative Luftfeuchte. Die Anordnung dieser Sensoren ist ortsnah zueinander ausgebildet, wobei die Sensoren im Idealfall in einer Modulbaugruppe zusammengefasst sein können. Die Sensoren sind mit einer Schaltungsplatine verbunden, die ihrerseits mit der Steuerelektronik für die Ventilatoreinrichtung in Verbindung steht. Die Schaltungsplatine kann in der Modulbaugruppe der Sensoren angeordnet sein oder mit der Sensormodulbaugruppe über einfache Datenleitung in Verbindung stehen. Im letztgenannten Fall kann die Platine integraler Bestandteil der Steuerung selbst sein.

In besonders bevorzugter Weise ist auch die Drehzahlregelung der Ventilatoreinrichtung modularschaltungstechnisch integriert.

Die Sensorausgestaltung des Ventilatormoduls schafft in vorteilhafter Weise die Möglichkeit, die Enthalpie des Luftstromes ermitteln zu können, womit eine deutlich präzisere und erheblich verbesserte Steuerung der Ventilatoreinrichtung ausgebildet ist, die darüber hinaus auch erheblich vereinfacht ist.

Der mittels der Sensoren für Temperatur, Strömungsvolumen und relative Luftfeuchte erfassten Messwerte können in einer Vergleichsschaltung mit vorgebbaren Sollwerten verglichen werden. In Abhängigkeit der so ermittelten Vergleichswerte kann dann eine Steuerung der Lüftungseinheit vorgenommen werden, beispielsweise durch entsprechende Anpassung der Ventilatormotordrehzahl. Auf diese Weise wird eine Regelung erzielt, die es gestattet, die durch die Lüftungseinheit bewirkte Luftströmung zur Erzielung eines angenehmen Raumklimas zu optimieren.

Die erfassten Messwerte und/oder die ermittelten Vergleichswerte können im Übrigen dazu genutzt werden, die absolute Luftfeuchte einerseits sowie die absolute Enthalpie andererseits bestimmen zu können, und zwar sowohl auf der einen Luftseite der Lüftungseinheit als auch auf der anderen Luftseite der Lüftungseinheit. Dabei wird die eine Luftseite der Lüftungseinheit typischerweise durch die Außenatmosphäre, das heißt die Außenluft und die andere Luftseite der Lüftungseinheit durch die Innenluft, das heißt die in einem Raum oder einem Teil hiervon befindliche Innenluft gebildet. Mittels der Einrichtung kann in diesem Zusammenhang sichergestellt werden, dass die Unterschiede zwischen Außenluft und Innenluft hinsichtlich Feuchtigkeit und Enthalpie möglichst gering ausfallen, so dass die Ausbildung einer von einem Nutzer als angenehm empfundenen Innenluft, das heißt die Aufrechterhaltung einer hohen Innenluftqualität sichergestellt ist. Bevorzugterweise wird die Ventilatormotordrehzahl deshalb derart gewählt, dass sich eine möglichst geringe Luftfeuchtigkeitsdifferenz und/oder eine möglich geringe Enthalpiedifferenz zwischen den beiden Luftseiten der Lüftungseinheit einstellt.

Das Ventilatormodul ermöglicht darüber hinaus in vorteilhafter Weise eine CO₂-Regelung. Die CO₂-Regeiung macht sich zu Nutze, dass der CO₂-Ausstoß einer Person proportional zu deren Beeinflussung der Raumfeuchtigkeit ist. Die mit dem Ventilatormodul mögliche Feuchtigkeitsmessung erlaubt insofern einen indirekten Rückschluss auf den CO₂-Gehalt auf der Raumluftseite der Lüftungseinheit. In vorteilhafter Weise erlaubt es diese Ausgestaltung insofern, Luftfeuchtigkeitsgrenzwerte auf Einhaltung zu prüfen, was indirekt eine CO₂-Überwachung zur Folge hat, so dass es mittels des erfindungsgemäßen Moduls möglich ist, indirekt auch die Einhaltung von vorgebbaren CO₂-Grenzwerten zu überprüfen.

Das Ventilatormodul verfügt gemäß einem weiteren Merkmal über eine Heizeinrichtung. Diese Heizeinrichtung dient dem Frostschutz und wird dazu genutzt, die über das Ventilatormodul im Betriebsfall angesogene Zuluft anzuwärmen, falls diese eine zu niedrige Temperatur aufweisen sollte, das heißt eine solche Temperatur, dass die Gefahr der Vereisung für die Lüftungseinheit oder Teilen hiervon, wie zum Beispiel insbesondere dem Wärmetauscher besteht. Dabei erfolgt eine Regelung der Heizeinrichtung bevorzugterweise nicht nur über die Erfassung der Temperatur der Zuluft sondern auch über die Erfassung der Luftfeuchte der Abluft. Eine entsprechende Regelungseinrichtung ist zu diesem Zweck in vorteilhafter Weise vorgesehen, die mit einer Vergleichsschaltung die von den Sensoren detektierten Messwerte mit vorgebbaren Vergleichswerten vergleicht und in Abhängigkeit des ermittelten Vergleichsergebnisses die Heizeinrichtung für die Zuluft betreibt. Dabei erbringt die Luftfeuchtemessung den Vorteil, dass die Heizeinrichtung tatsächlich nur dann betrieben wird, wenn der Luftfeuchtegehalt in der Abluft bei gegebener Temperatur der Zuluft ein Einfrieren der Lüftungseinheit oder Teilen hiervon überhaupt wahrscheinlich macht. Dabei gilt, dass die Wahrscheinlichkeit der Vereisung mit abnehmender Luftfeuchte in der Abluft ebenfalls abnimmt. Die Berücksichtigung des Luftfeuchtegehalts in der Abluft gestattet es insofern, einen unnötigen Betrieb der Heizeinrichtung zu vermeiden, was hilft, Energie zu sparen. In jedem Fall aber wird durch diese Ausgestaltung sichergestellt, dass sich aufgrund der Luftfeuchte in der Abluft in der Lüftungseinheit ansammelndes Kondensat nicht einfriert.

Die erfindungsgemäße Vorrichtung ist bevorzugt in einem nachstehend beschriebenen Verfahren zu Steuerung des Volumenstroms eines Ventilators einsetzbar.

Es wird vorgeschlagen ein Verfahren zur Steuerung des Volumenstroms eines Ventilators bzw. einer Ventilatoreinrichtung. Insbesondere betrifft das Verfahren die Steuerung des Volumenstroms bei einem Ventilator mit einer Stufenregelung, und zwar in dem Fall, dass von einer Leistungsstufe auf eine andere umgeschaltet wird. Das Verfahren findet insbesondere im Zusammenhang mit dem Ventilatormodul der vorbeschriebenen Art Verwendung.

Im Stand der Technik ist es bekannt, dass die Regelungsstufen auf den Volumenstrom bezogen sind, also beispielsweise 50m³/h, 150m³/h oder 500m³/h. Wird nun beispielsweise von 50m³/h auf 500m³/h umgeschaltet, so ergibt sich grundsätzlich ein Fehler von 500m³/h-50m³/h = 450m³/h. Ein solcher von der Messstrecke festgestellter Fehler führt dazu, dass die Drehzahl sehr schnell sehr hoch gestellt wird, was üblicherweise zu einem Überschießen führt. Sie wird dann wieder entsprechend herunter gestellt, was zu einem Unterschießen des Sollwertes führt. Auf diese Weise ergibt sich eine lange iterative Annäherung an den eigentlichen Volumenstrom-Sollwert. Derartige Regelvorgänge sind tatsächlich in Gebäuden und bei Lüftungsanlagen auch zu hören, wenn die Leistungsstufen gewählt werden.

Damit wird ein Verfahren zur Steuerung des Volumenstroms eines Ventilators angegeben, welches eine schnelle und gezielte Steuerung der ausgewählten Leistungsstufe ermöglicht und ein iteratives Über- und Unterschießen um einen Sollwert vermeidet.

Die Besonderheit ergibt sich aus einem Verfahren zur Steuerung des Volumenstroms eines Ventilators mit Stufenregelung für die Leistung bei einem Umschalten von einer Leistungsstufe auf eine andere, wobei bei Anwahl einer Stufe in einem ersten Schritt eine vorgegebene Drehzahl für den Ventilatormotor eingestellt und in einem zweiten Schritt die Drehzahl zur Erreichung eines vorgegebenen Volumenstroms eingestellt wird.

Gemäß dieses Verfahrens wird also zunächst eine Solldrehzahl angesteuert und eingestellt. Diese kann vorgegeben und beispielsweise in einem Speicher bereitgestellt sein. Sie kann auch aus vorhergehenden Vorgängen empirisch ermittelt und gespeichert worden sein. So kann beispielsweise nach einer langen Laufzeit auf einer Leistungsstufe die Motordrehzahl ermittelt und gespeichert werden. Wird die Leistungsstufe angewählt, wird also in einem ersten Schritt die gespeicherte Solldrehzahl angesteuert und der Motor solange gesteuert, bis die Solldrehzahl erreicht ist. Erst jetzt beginnt die Auswertung der Volumenstrom-Sensoren, um auf diese Weise nun eine Feineinstellung der Drehzahl durchzuführen, um zu dem gewünschten Volumenstrom zu gelangen.

Da der Volumenstrom von Umweltparametern abhängen kann, ist diese Feinregelung der Ausgangsdrehzahl erforderlich. Auf diese Weise kann sehr direkt und sehr präzise ein gewünschter Volumenstrom eingestellt werden.

## Patentansprüche

1. Vorrichtung zur Ermittlung des von einem Ventilator transportierten Volumenstroms, **gekennzeichnet durch**
- einen im Bereich einer Einlaufdüse des Ventilators anzuordnenden geschlossenen Ringkanal mit einer Vielzahl von Öffnungen in der äußeren Wandung und wenigstens einer Messöffnung,
- einem Referenzrohr zur Positionierung in einer Umgebungsatmosphäre und
- einen Druckdifferenzsensor zur Verbindung mit der Messöffnung und dem Referenzrohr.

2. Vorrichtung nach Anspruch 1, **dadurch gekennzeichnet, dass** der Ringkanal aus Kunststoff gebildet ist.

3. Vorrichtung nach Anspruch 1 oder 2, **dadurch gekennzeichnet, dass** der Ringkanal einen geschlossenen 360 °-Ring bildet.

4. Vorrichtung nach einem der vorhergehenden Ansprüche, **dadurch gekennzeichnet, dass** die Öffnungen im Wesentlichen mittelpunktsymmetrisch in der Wandung des Ringkanals angeordnet sind.

5. Vorrichtung nach einem der vorhergehenden Ansprüche, **dadurch gekennzeichnet, dass** die Messöffnung in einer in bestimmungsgemäßer Einbauposition oberhalb des Äquators des Ringkanals liegenden Position angeordnet ist.

6. Vorrichtung nach einem der vorhergehenden Ansprüche, **dadurch gekennzeichnet, dass** der Druckdifferenzsensor ein thermischer Druckdifferenzsensor ist.

## Claims

1. A device for calculating the volume flow transported by a ventilator, **characterized by**
- a closed ring channel that is to be placed in the area of an inlet nozzle of the ventilator and that comprises a plurality of openings in the outer wall and at least one measurement port,
- a reference tube to be positioned in a surrounding atmosphere and
- a differential pressure sensor to be connected to the measurement port and the reference tube.

2. A device according to claim 1, **characterized in that** the ring channel is made of plastic.

3. A device according to claim 1 or 2, **characterized in that** the ring channel forms a closed ring of 360°.

4. A device according to one of the preceding claims, **characterized in that** the openings are substantially arranged symmetrically with respect to the center in the wall of the ring channel.

5. A device according to one of the preceding claims, **characterized in that** the measurement port is arranged in a position above the equator of the ring channel when being placed as intended.

6. A device according to one of the preceding claims, **characterized in that** the differential pressure sensor is a thermal differential pressure sensor.

## Revendications

1. Dispositif de détermination d'un débit volumique transporté par un ventilateur, **caractérisé par**
- un canal annulaire qu'il faut disposer au niveau d'une buse d'entrée du ventilateur, le canal annulaire comportant une pluralité d'ouvertures dans la paroi extérieure et au moins une ouverture de mesure,
- un tuyau de référence pour être positionné dans une atmosphère ambiante et
- un capteur de pression différentielle pour être relié à l'ouverture de mesure et au tuyau de référence.

2. Dispositif selon la revendication 1, **caractérisé en ce que** le canal annulaire est fabriqué en matière plastique.

3. Dispositif selon la revendication 1 ou la revendication 2, **caractérisé en ce que** le canal annulaire forme un anneau fermé de 360°.

4. Dispositif selon l'une des revendications précédentes, **caractérisé en ce que** les ouvertures sont essentiellement disposées de manière symétrique par rapport au centre dans la paroi du canal annulaire.

5. Dispositif selon l'une des revendications précédentes, **caractérisé en ce que** l'ouverture de mesure se trouve dans une position au-dessus de l'équateur du canal annulaire si elle est aménagée dans la position prévue.

6. Dispositif selon l'une des revendications précédentes, **caractérisé en ce que** le capteur de pression différentielle est un capteur de pression différentielle thermique.
